# EUROPÄISCHE PATENTSCHRIFT

(11) **EP 3 178 141 B1**
(45) Veröffentlichungstag und Bekanntmachung des Hinweises auf die Patenterteilung: **06.06.2018**
(21) Anmeldenummer: 15756342.0
(22) Anmeldetag: 05.08.2015
(51) Int. Cl.: H02B 1/21

(54) **ADAPTER FÜR DIE KONTAKTIERUNG EINES LEISTUNGSSCHALTERS AN EINEM SAMMELSCHIENENSYSTEM**
ADAPTER FOR CONTACTING A CIRCUIT BREAKER TO A BUSBAR SYSTEM
ADAPTATEUR POUR CONTACTER UN DISJONCTEUR A UN SYSTEME DE BARRES OMNIBUS

(30) Priorität: 05.08.2014 DE 102014111095; 16.07.2015 DE 102015111560
(43) Veröffentlichungstag der Anmeldung: 14.06.2017
(73) Patentinhaber: Rittal GmbH & Co. KG, 35745 Herborn (DE)
(72) Erfinder: BASTIAN, Andreas, 35690 Dillenburg (DE)
(74) Vertreter: Angerhausen, Christoph
(86) Internationale Anmeldenummer: PCT/DE2015/100329
(87) Internationale Veröffentlichungsnummer: WO 2016/019950

(56) Entgegenhaltungen:
- DE-A1-102009 023 802

## Beschreibung

Die Erfindung geht aus von einem Adapter für die Kontaktierung eines Leistungsschalters an einem Sammelschienensystem, mit einem Gehäuse, das eine erste Montageseite zur Befestigung und elektrischen Kontaktierung des Adapters auf mindestens einer Sammelschiene eines Sammelschienensystems und eine zweite Montageseite zur Befestigung und elektrischen Kontaktierung eines Leistungsschalters auf dem Gehäuse aufweist. Ein derartiger Adapter ist aus der DE 10 2009 023 802 A1 bekannt.

In der Praxis ist es häufig erforderlich, dass unterschiedliche Typen und Bauformen von Leistungsschaltern mit einem gegebenen Sammelschienensystem elektrisch und mechanisch verbunden werden müssen. Insbesondere die für die mechanische Befestigung des Leistungsschalters an dem Sammelschienensystem leistungsschalterseitig vorgesehenen Befestigungslöcher oder Schraubendurchlässe variieren von Leistungsschalter zu Leistungsschalter, insbesondere hinsichtlich ihres Abstandes und Gewindedurchmessers. Aus dem Stand der Technik ist es daher bekannt, eine der Vielfalt der unterschiedlichen Leistungsschalter entsprechende Vielfalt Adapter vorzusehen, mit Hilfe welcher der jeweilige Leistungsschalter mit dem Sammelschienensystem verbunden werden kann. Dies hat den Nachteil, dass stets eine Vielzahl unterschiedlicher Adapter vorgehalten werden muss.

Die DE 10 2009 023 802 A1 schlägt zur Lösung dieses Problems einen Adapter vor, bei dem in einem Gehäuse zwei Befestigungsschienen für einen Leistungsschalter aufgenommen sind, die in einer Wendeplatte wendbar gelagert sind, und wobei jede Befestigungsschiene mehrere Gewindelöcher aufweist. Dabei ist vorgesehen, dass jeweils eines der mehreren Gewindelöcher der Aufnahme einer Befestigungsschraube eines bestimmten Leistungsschaltertyps dient. Die Befestigungsschiene soll in unterschiedlichen Längspositionen zur Wendeplatte festlegbar sein, um ein je nach zu befestigendem Leistungsschalter erforderliches Gewindelochbild bereitzustellen.

Aufgrund der begrenzten Längsverschieblichkeit der Befestigungsschiene kann jedoch nur eine begrenzte Anzahl unterschiedlicher Gewindelochbilder mit Hilfe des Adapters bereitgestellt werden. Es ist daher die Aufgabe der Erfindung, einen gattungsgemäßen Adapter für die Kontaktierung eines Leistungsschalters an einem Sammelschienensystem derart weiterzuentwickeln, dass er für die Adaptierung einer Vielzahl unterschiedlicher Leistungsschaltertypen geeignet ist.

Diese Aufgabe wird erfindungsgemäß mit Hilfe eines Adapters gelöst, der die Merkmale des Patentanspruchs 1 aufweist. Die abhängigen Ansprüchen 2 bis 10 entsprechen jeweils vorteilhaften Ausführungsformen der Erfindung.

Der erfindungsgemäße Adapter zeichnet sich dadurch aus, dass auf der zweiten Montageseite für die Befestigung eines Leistungsschalters mindestens eine Drehscheibe mit mehreren Sätzen Gewindeaufnahmen um eine Drehachse senkrecht zu den Montageseiten drehbar gelagert befestigt ist, wobei jeder Satz Gewindeaufnahmen für die Montage eines bestimmten Leistungsschaltertyps ausgelegt ist, so dass je nach Stellposition der Drehscheibe jeweils einer der Sätze Gewindeaufnahmen in einer Montageposition für einen bestimmten Leistungsschaltertyp angeordnet ist.

Die Verwendung einer Drehscheibe ermöglicht es, dass eine Vielzahl unterschiedlicher Gewindelochbilder bereitgestellt werden kann. Darüber hinaus ist es für die Umrüstung des Adapters von einem Leistungsschaltertyp auf einen anderen lediglich erforderlich, dass die Drehscheibe verdreht wird. Im Gegensatz zu den aus dem Stand der Technik bekannten Befestigungsschienen findet somit effektiv keine Verlagerung der Drehscheibe statt, sie ändert mit dem Verdrehen lediglich ihre Ausrichtung. Dementsprechend kann der erfindungsgemäße Adapter kompakte Baumaße aufweisen.

Ein Satz Gewindeaufnahmen soll mindestens eine Gewindeaufnahme bzw. mindestens ein Gewindeloch aufweisen. In der Regel weist ein Satz Gewindeaufnahmen jedoch zwei Gewindeaufnahmen bzw. Gewindelöcher auf. Ein Satz Gewindeaufnahmen kann jedoch auch mehr als zwei Gewindeaufnahmen bzw. Gewindelöcher aufweisen. Häufig werden Leistungsschalter beispielsweise mit vier Gewindeschrauben an dem Adapter verschraubt. Dazu können die Gewindeaufnahmen in zwei vertikal zueinander versetzten Reihen von jeweils zwei Gewindeaufnahmen bzw. Gewindelöchern bereitgestellt sein. Erfindungsgemäß kann es vorgesehen sein, dass sämtliche der vier Gewindeaufnahmen einen Satz Gewindeaufnahmen bilden, die von einer Drehscheibe bereitgestellt sind. Es kann jedoch auch vorgesehen sein, dass jeweils zwei Gewindeaufnahmen einen Satz Gewindeaufnahmen bilden, wobei die beiden Sätze Gewindeaufnahmen von unterschiedlichen Drehscheiben, welche zueinander versetzt angeordnet sind, bereitgestellt werden.

Bei einer Ausführungsform der Erfindung ist beispielsweise vorgesehen, dass die zweite Montageseite zwei der Drehscheiben aufweist, die auf der zweiten Montageseite versetzt zueinander angeordnet sind, wobei eine erste der Drehscheiben mindestens einen ersten Befestigungspunkt für den Leistungsschalter und eine zweite der Drehscheiben mindestens einen zweiten, zu dem ersten Befestigungspunkt versetzten Befestigungspunkt bereitstellt. Die Befestigungspunkte sind dabei durch einen ersten Satz Gewindeaufhahmen, der von einer ersten Drehscheibe bereitgestellt ist, bzw. von einem zweiten Satz Gewindeaufnahmen, der von einer zweiten der Drehscheiben bereitgestellt ist, gebildet.

Bei einer Ausführungsform der Erfindung bildet der Adapter dadurch eine besonders handliche und kompakte Einheit, dass die Drehscheibe in dem Gehäuse aufgenommen ist, wobei das Gehäuse, insbesondere die zweite Montageseite, im Randbereich der Drehscheibe eine Eingrifföffnung für den manuellen Drehantrieb der Drehscheibe aufweist. Es kann vorgesehen sein, dass in dem Randbereich der Drehscheibe eine Riffelung oder anderweitige Kontur zur Erhöhung der Griffigkeit ausgebildet ist.

Zur Verbesserung der Bedienungsfreundlichkeit ist bei einer Ausführungsform der Erfindung die Drehscheibe in dem Gehäuse aufgenommen, wobei die Drehscheibe die verschiedenen Sätze Gewindeaufnahmen kennzeichnende Aufschriften aufweist, wobei die zweite Montageseite ein Sichtfenster aufweist, durch das je nach Stellposition der Drehscheibe genau eine der Aufschriften sichtbar ist, und wobei die Sätze Gewindeaufnahmen, die Aufschriften und das Sichtfenster derart zueinander angeordnet sind, dass jeweils eine einen bestimmten Satz Gewindeaufnahmen kennzeichnende Aufschrift in dem Sichtfenster sichtbar ist, wenn dieser Satz Gewindeaufnahmen in der Montagsposition angeordnet ist. Bei dieser Ausführungsform muss ein Benutzer demnach lediglich die den zu verbauenden Leistungsschalter bezeichnende Aufschrift in das Sichtfenster bringen, so dass die Aufschrift durch das Sichtfenster sichtbar ist, um den zugehörigen Satz Gewindeaufnahmen in die Montageposition, in der diese Gewindeaufnahmen für die Montage des zugehörigen Leistungsschalters ausgerichtet sind, zu überführen.

Dabei kann vorgesehen sein, dass die zweite Montageseite mindestens eine Öffnung aufweist, durch die derjenige Satz Gewindeaufnahmen zugänglich ist, der sich in der Montageposition befindet, wobei sämtliche anderen Sätze Gewindeaufnahmen von der zweiten Montageseite verdeckt sind.

Die Bedienungsfreundlichkeit des erfindungsgemäßen Adapters wird dadurch noch weiter erhöht, dass bei einer Ausführungsform der Erfindung die Drehscheibe einen im Wesentlichen kreisrunden Außenumfang aufweist, an dem Rastnasen ausgebildet sind, wobei an einem im Wesentlichen kreisrunden Innenumfang einer Ausnehmung im Innern des Gehäuses, in der die Drehscheibe aufgenommen ist, ein zu den Rastnasen korrespondierender Rastnasensitz ausgebildet ist, und wobei die Sätze Gewindeaufnahmen, die Rastnasen und der Rastnasensitz derart zueinander angeordnet sind, dass die Drehscheibe jeweils eine Rastposition einnimmt, wenn sich einer der Sätze Gewindeaufhahmen in der Montageposition befindet.

Um die Variabilität des erfindungsgemäßen Adapters insbesondere im Hinblick auf die adaptierbaren Leistungsschaltertypen noch weiter zu erhöhen, ist bei einer Ausführungsform der Erfindung die zweite Montageseite als eine wahlweise abnehmbare Abdeckung eines Innenraums des Gehäuses, in dem die mindestens eine Drehscheibe aufgenommen ist, ausgebildet, wobei die mindestens eine Drehscheibe in dem Innenraum des Gehäuses auswechselbar auf einer Drehwelle montiert, insbesondere aufgeklipst, ist.

Es ist weiterhin denkbar, dass der Adapter eine als separates Bauteil ausgebildete Adapterplatte aufweist, welche die mindestens eine Drehscheibe aufweist, wobei die Adapterplatte mit der mindestens einen Drehscheibe an dem Gehäuse festgelegt ist. Die Adapterplatte kann beispielsweise über eine wieder auslösbare Verbindung, etwa über eine Schraub- oder eine Rastverbindung, in einer Adapterplattenaufnahme des Gehäuses festgelegt sein. So ist es beispielsweise denkbar, dass die Adapterplatte an einem Leistungsschalter vormontiert bereitgestellt ist, so dass der Leistungsschalter samt der Adapterplatte durch Einsetzen der Adapterplatte in eine Adapterplattenaufnahme des Gehäuses festgelegt werden kann.

Die Verwendung einer Adapterplatte ermöglicht es somit, dass der Leistungsschalter über die Gewindeaufnahme an der Adapterplatte vormontiert werden kann, so dass für die Endmontage lediglich noch die Adapterplatte in eine entsprechende Adapterplattenaufnahme des Gehäuses eingesetzt und dort festgelegt werden muss. Für die Festlegung der Adapterplatte in der Adapterplattenaufnahme des Gehäuses kann vorgesehen sein, dass die Adapterplatte Befestigungsdurchlässe für Schrauben oder ähnliche Befestigungsmittel aufweist. Die Adapterplatte kann weiterhin an ihrer unteren Längsseite eine Einhängleiste aufweisen, über die sie in eine entsprechende Ausnehmung in der Adapterplattenaufnahme des Gehäuses eingesetzt werden kann.

Weitere Einzelheiten der Erfindung werden anhand der nachstehenden Figuren erläutert. Dabei zeigt:
- Figur 1: eine perspektivische Sicht auf die zweite Montageseite einer Ausführungsform des erfindungsgemäßen Adapters, wobei zur besseren Übersichtlichkeit die zweite Montageseite entfernt worden ist;
- Figur 2: den Adapter gemäß Figur 1 bei montierter zweiter Montageseite;
- Figur 3: eine Detailansicht der unteren Hälfte des Adapters gemäß Figur 2;
- Figur 4: eine Detailansicht der Drehscheibe des Adapters gemäß der Ausführungsform der Figuren 1 bis 3;
- Figur 5: eine Detailansicht der Drehscheibe des Adapters gemäß der Ausführungsform der Figuren 1 bis 4 im Adaptergehäuse aufgenommenen Zustand;
- Figur 6: eine weitere Ausführungsform des Adapters, bei dem die mindestens eine Drehscheibe Bestandteil einer separaten Adapterplatte ist, die in einer perspektivischen Vorderansicht gezeigt ist; und
- Figur 7: die Adapterplatte gemäß Figur 6 in einer perspektivischen Rückansicht.

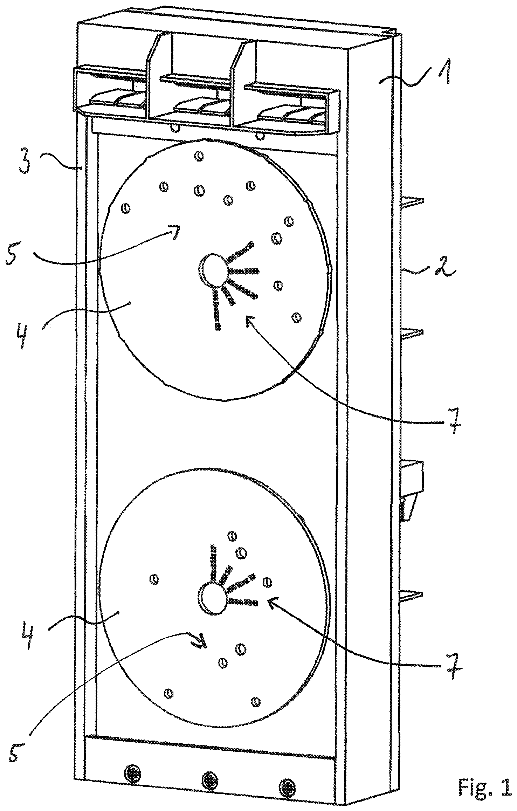

Bei der in Figur 1 dargestellten Ausführungsform des erfindungsgemäßen Adapters ist zur besseren Übersichtlichkeit die Montageseite 3 bis auf eine äußere Umrandung entfernt worden. Die Montageseite 3 wird bei der in der Figur 1 dargestellten Ausführungsform im Wesentlichen von einer Abdeckung bereitgestellt, welche bei Bedarf entfernt werden kann, etwa um auf die im Gehäuseinnern aufgenommenen Drehscheiben 4 zuzugreifen.

Der Adapter gemäß Figur 1 weist zwei Drehscheiben auf, wobei eine obere Drehscheibe 4 für die Bereitstellung des ersten Satzes Gewindeaufnahmen 5 und eine vertikal darunter angeordnete, untere Drehscheibe 4 für die Bereitstellung eines zweiten Satzes Gewindeaufnahmen 5 vorgesehen ist. Die obere Drehscheibe 4 stellt dabei die Gewindeaufnahmen 5 für eine obere Befestigungslochreihe des Leistungsschalters bereit, während über die untere Drehscheibe 4 ein zweiter Satz Gewindeaufnahmen 5 für eine untere Befestigungslochreihe des Leistungsschalters bereitgestellt ist. Beispielsweise kann vorgesehen sein, dass der Leistungsschalter über zwei obere Befestigungslöcher, die mit zwei Gewindeaufnahmen der oberen Drehscheibe 4 korrespondieren, und mit zwei unteren Befestigungslöchern, die mit zwei Gewindeaufnahmen 5 der unteren Drehscheibe 4 korrespondieren, an dem Adapter festgeschraubt werden kann. Auf die obere und die untere Drehscheibe 4 sind die Sätze Gewindeaufnahmen 5 kennzeichnende Aufschriften 7 aufgebracht.

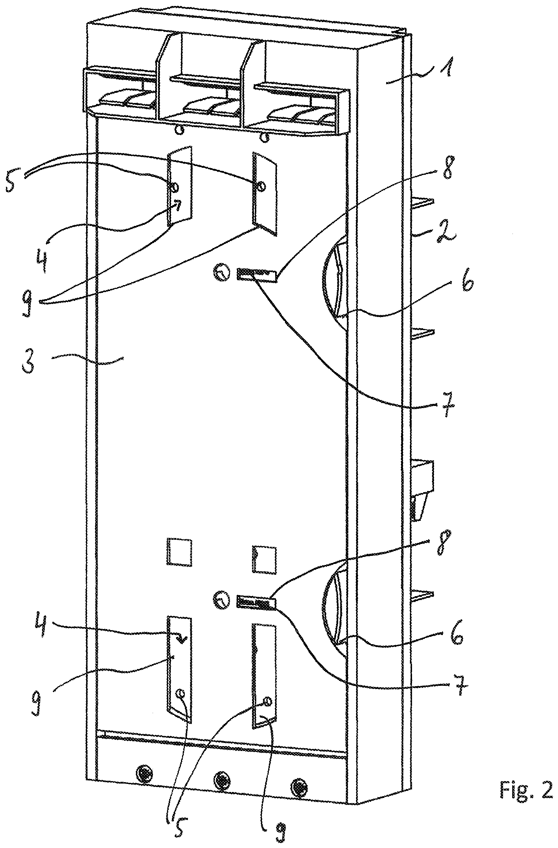

Die Figur 2 zeigt den Adapter gemäß Figur 1 in geschlossenem Zustand, d. h. mit aufgebrachter Abdeckung, welche im Wesentlichen die zweite Montageseite 3 bildet. In der zweiten Montageseite 3 bzw. dieser Abdeckung sind diverse Öffnungen und Durchlässe eingebracht. Zum einen weist die zweite Montageseite 3 eine Eingrifföffnung 6 für den manuellen Drehantrieb der Drehscheibe 4 auf. Die Eingrifföffnung 6 ist als ein seitlicher Ausschnitt in der die Montageseite 3 bildenden Abdeckung ausgebildet. Es ist jeweils ein Ausschnitt 6 für die obere und die untere Drehscheibe 4 vorgesehen.

Darüber hinaus weist die zweite Montageseite 3 je Drehscheibe zwei Öffnungen 9 auf, in denen gerade diejenigen Gewindeaufnahmen 5 erscheinen, welche demjenigen Satz Gewindeaufnahmen 5 zugehören, der sich gerade in der Montageposition befindet. Es ist jeweils eine Öffnung 9 je Gewindeaufnahme 5 vorgesehen. Die zweite Montageseite 3 weist darüber hinaus ein Sichtfenster 8 auf, in dem gerade diejenige Aufschrift 7 zum Vorscheinen kommt, welche den Satz Gewindeaufnahmen 5 kennzeichnet, der sich gerade in der Montageposition befindet und damit über die Öffnungen 9 zugänglich ist.

Dies ermöglicht eine einfache Bedienung des erfindungsgemäßen Adapters. Ein Benutzer muss lediglich die Drehscheiben 4 über die Eingrifföffnungen 6 manuell so ausrichten, dass in dem Sichtfenster 8 die Aufschrift 7 des zu montierenden Leistungsschaltertyps erscheint. Dann ist gerade gewährleistet, dass über die Öffnungen 9 diejenigen Gewindeaufnahmen 5 zugänglich und in die Montageposition gebracht sind, welche für die Montage des gewünschten Leistungsschaltertyps erforderlich sind.

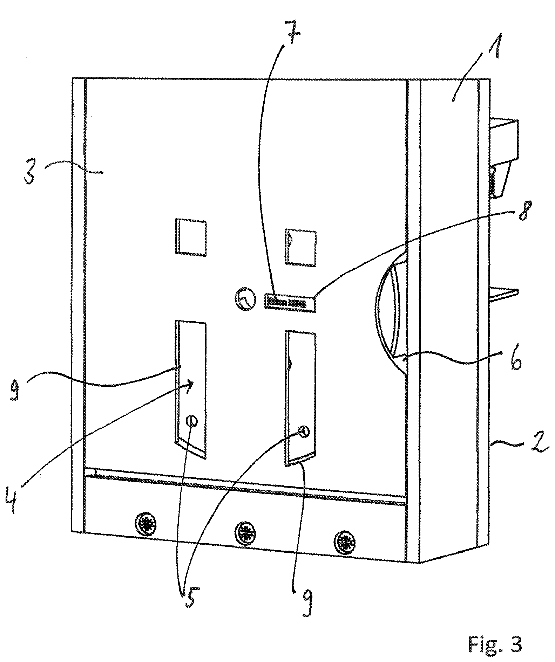

Die Figur 3 zeigt eine Detailansicht der unteren Hälfte des Adapters gemäß Figur 2. Es ist zu erkennen, dass jeweils eine Öffnung 9 je Gewindeaufnahme 5 des aus zwei Gewindeaufnahmen 5 bestehenden Satzes Gewindeaufnahmen vorgesehen ist. Die die zweite Montageseite 3 bildende Abdeckung und die darin ausgebildeten Öffnungen 9 sind gerade derart geformt, dass nur jeweils diejenigen Gewindeaufnahmen 5 über die Öffnungen 9 zugänglich sind, welche für die Montage des über das Sichtfenster 8 ersichtlichen Leistungsschaltertyps erforderlich sind. Sämtliche anderen Gewindeaufnahmen 5 anderer Sätze Gewindeaufnahmen für die Montage anderer Leistungsschaltertypen sind von der die Montageseite 3 bildenden Abdeckung verdeckt.

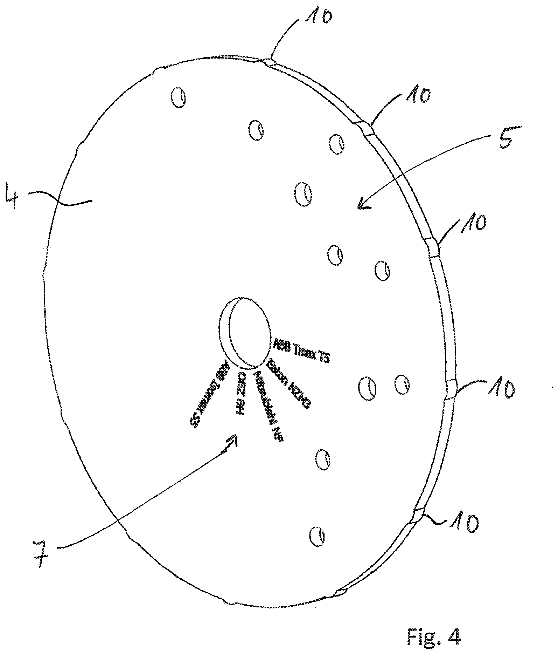

Die Figur 4 zeigt die Drehscheibe 4 des erfindungsgemäßen Adapters im Detail. In einem Mittenbereich erstrecken sich winkelmäßig voneinander beabstandet die Aufschriften 7 zur Kennzeichnung der Gewindeaufnahmen 5. Die Aufschriften 7 erstrecken sich gerade in radialer Richtung, so dass durch Verdrehen der Drehscheibe 4 jeweils eine gewünschte Aufschrift 7 mit dem Sichtfenster 8 (s. Figur 3) in die Flucht gebracht werden kann. Die Aufschriften 7 sind in Bezug auf die aus jeweils Gewindeaufnahmen 5 bestehenden Sätze Gewindeaufnahmen derart angeordnet, dass unter Berücksichtigung der Öffnungen 9 sowie des Sichtfensters 8 gerade diejenigen Gewindeaufnahmen 5 in den Öffnungen 9 zugänglich werden, deren bezeichnende Aufschrift 7 in dem Sichtfenster 8 erscheint.

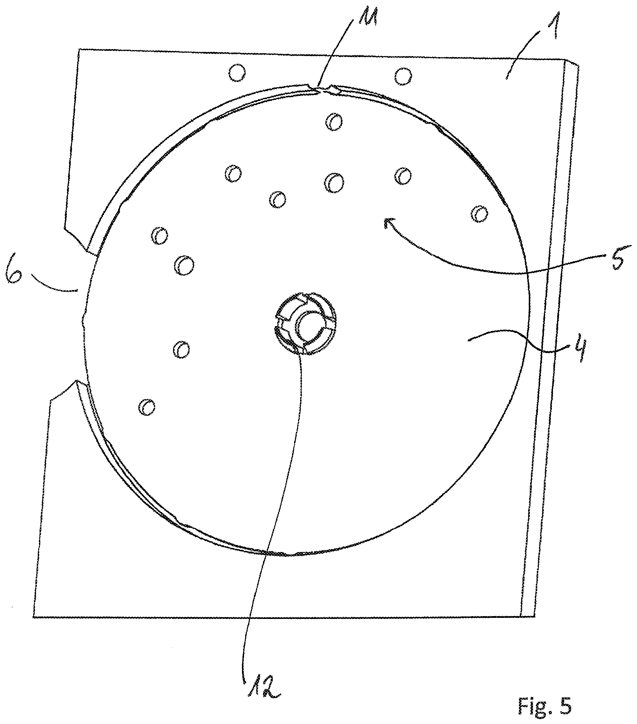

Die Drehscheibe 4 weist an ihrem Außenumfang Rastnasen 10 auf. Die Rastnasen 10 sind regelmäßig beabstandet. Wie in Figur 5 zu erkennen ist, weist das Gehäuse 1 in seinem Innern eine Aufnahme für die Drehscheibe 4 auf, die an ihrem Innenumfang einen Rastnasensitz 11 aufweist, in dem die Rastnasen 10 der Drehscheibe 4 durch Verdrehen der Drehscheibe 4 in eine Rastposition gebracht werden können. Die Rastnasen 10 am Außenumfang der Drehscheibe 4 sind gerade derart in Bezug auf die Sätze Gewindeaufnahmen sowie die Aufschriften 7 angeordnet, dass die Drehscheibe 4 jeweils genau dann eine Rastposition . einnimmt, wenn einer der Sätze Gewindeaufnahmen 5 in der Montageposition angeordnet ist und dementsprechend die zugehörigen Gewindeaufnahmen 5 über die Öffnungen 9 (s. Figur 3) zugänglich und die den zugehörigen Leistungsschaltertyp kennzeichnende Aufschrift 7 über das Sichtfenster 8 sichtbar ist.

Das Gehäuse weist eine Drehwelle 12 auf, auf die die Rastscheibe aufgeklipst ist. Die Rastscheibe selbst kann daher als vergleichbar einfaches Blechformteil ausgebildet sein, mit einer zentralen Durchgangsbohrung als Lager.

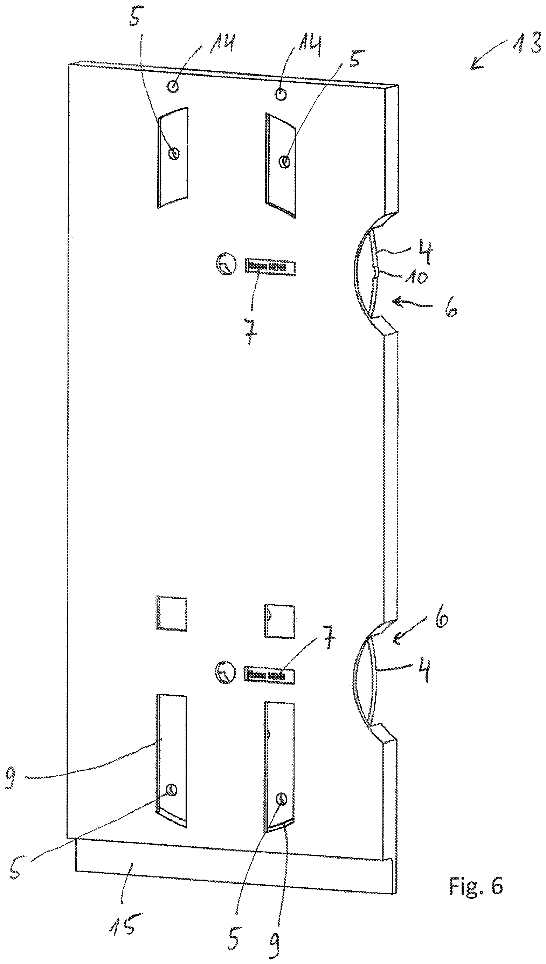

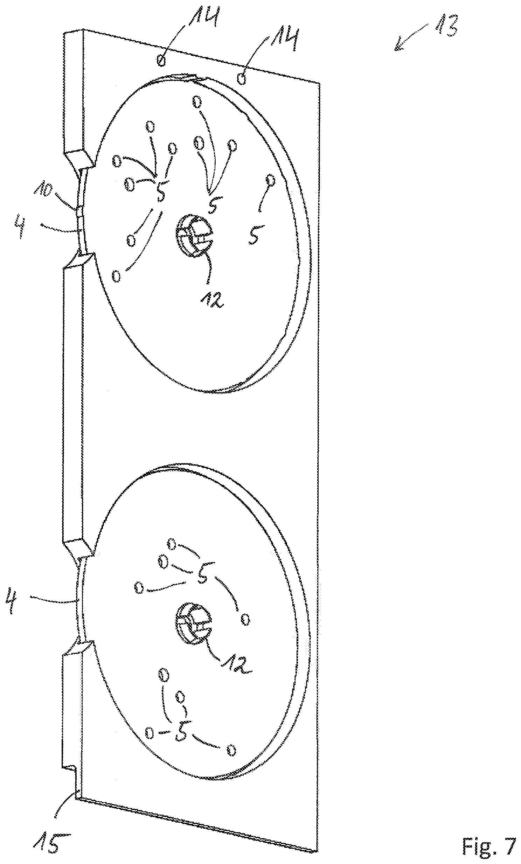

Die Figuren 6 und 7 zeigen eine Ausführungsform des erfindungsgemäßen Adapters, genauer einer Adapterplatte 13, welche in Verbindung mit einem Gehäuse verwendet werden kann, welches von den in den Figuren 1-5 gezeigten Ausführungsformen abweichend anstelle der fest verbauten Drehscheiben 4 eine Adapterplattenaufnahme zur Aufnahme der Adapterplatte 13 aufweist. Für die Aufnahme der Adapterplatte 13 in der Adapterplattenaufnahme weist die Adapterplatte 13 eine Einhängleiste 15 an ihrer horizontalen unteren Längsseite auf, welche in eine entsprechende Steckaufhahme der Adapterplattenaufnahme des Gehäuses eingesetzt werden kann. An der gegenüberliegenden, oberen horizontalen Längsseite sind Befestigungsdurchlässe für Schrauben oder ähnliche Befestigungsmittel vorgesehen, über die die Adapterplatte 13 in der Adapterplattenaufnahme des Gehäuses festgelegt werden kann.

Für die Montage eines Leistungsschalters an einem Sammelschienensystem kann somit in einem ersten Schritt die Adapterplatte 13 an einem Leistungsschalter über die Gewindeaufnahmen 5 in der zuvor beschriebenen Art festgelegt werden. Nachdem der so vorbereitete Leistungsschalter mit der Adapterplatte 13 verbunden worden ist, kann die Adapterplatte über die Einhängleiste 15 und die Befestigungsdurchlässe 14 an dem Gehäuse des Adapters festgelegt werden. So ist es beispielsweise möglich, dass die Leistungsschalter mit den Adapterplatten 13 vormontiert bereitgestellt werden, so dass bei der Endmontage lediglich noch die Leistungsschalter über die Adapterplatte 13 in die Adapterplattenaufnahmen des Gehäuses eingesetzt und gegebenenfalls verschraubt werden müssen. Anstelle von Schaubverbindungen sind auch andere Verbindungstechnologien denkbar, um die Adapterplatte 13 mit dem Gehäuse zu verbinden, beispielsweise Klipsverbindungen.

### Bezugszeichenliste

- 1: Gehäuse
- . 2: erste
- 3: zweite Montageseite
- 4: Drehscheibe
- 5: Gewindeaufnahme
- 6: Eingrifföffnung
- 7: Aufschrift
- 8: Sichtfenster
- 9: Öffnung
- 10: Rastnase
- 11: Rastnasensitz
- 12: Drehwelle
- 13: Adapterplatte
- 14: Befestigungsdurchlässe
- 15: Einhängleiste

## Patentansprüche

1. Adapter für die Kontaktierung eines Leistungsschalters an einem Sammelschienensystem, mit einem Gehäuse (1), das eine erste Montageseite (2) zur Befestigung und elektrischen Kontaktierung des Adapters auf mindestens einer Sammelschiene eines Sammelschienensystems und eine zweite Montageseite (3) zur Befestigung und elektrischen Kontaktierung eines Leistungsschalters auf dem Gehäuse (1) aufweist, **dadurch gekennzeichnet, dass** auf der zweiten Montageseite (3) für die Befestigung eines Leistungsschalters mindestens eine Drehscheibe (4) mit mehreren Sätzen Gewindeaufnahmen (5) um eine Drehachse senkrecht zu den Montageseiten (2, 3) drehbar gelagert befestigt ist, wobei jeder Satz Gewindeaufnahmen (5) für die Montage eines bestimmten Leistungsschaltertyps ausgelegt ist, so dass je nach Stellposition der Drehscheibe (4) jeweils einer der Sätze Gewindeaufnahmen (5) in einer Montageposition für einen bestimmten Leistungsschaltertyp angeordnet ist.

2. Adapter nach Anspruch 1, bei dem die zweite Montageseite (3) zwei der Drehscheiben (4) aufweist, die auf der zweiten Montageseite versetzt zueinander angeordnet sind, wobei eine erste der Drehscheiben (4) mindestens einen ersten, durch einen ersten Satz Gewindeaufnahmen (5) gebildeten Befestigungspunkt für den Leistungsschaiter und eine zweite der Drehscheiben (4) mindestens einen zweiten, zu dem ersten Befestigungspunkt versetzten und durch einen zweiten Satz Gewindeaufnahmen gebildeten Befestigungspunkt bereitstellt.

3. Adapter nach einem der vorangehenden Ansprüche, bei dem die Drehscheibe (4) in dem Gehäuse (1) aufgenommen ist, wobei das Gehäuse (1), insbesondere die zweite Montageseite (3), im Randbereich der Drehscheibe (4) eine Eingrifföffnung (6) für den manuellen Drehantrieb der Drehscheibe (4) aufweist.

4. Adapter nach einem der vorangehenden Ansprüche, bei dem die Drehscheibe (4) in dem Gehäuse (1) aufgenommen ist, wobei die Drehscheibe (4) die verschiedenen Sätze Gewindeaufnahmen (5) kennzeichnende Aufschriften (7) aufweist, wobei die zweite Montageseite (3) ein Sichtfenster (8) aufweist, durch das je nach Stellposition der Drehscheibe (4) genau eine der Aufschriften (7) sichtbar ist, und wobei die Sätze Gewindeaufnahmen (5), die Aufschriften (7) und das Sichtfenster (8) derart zueinander angeordnet sind, dass jeweils eine einen bestimmten Satz Gewindeaufnahmen (5) kennzeichnende Aufschrift (7) in dem Sichtfenster (8) sichtbar ist, wenn dieser Satz Gewindeaufnahmen (5) in der Montagsposition angeordnet ist.

5. Adapter nach Anspruch 4, bei dem die zweite Montageseite (3) mindestens eine Öffnung (9) aufweist, durch die derjenige Satz Gewindeaufnahmen (5) zugänglich ist, der sich in der Montageposition befindet, wobei sämtliche anderen Sätze Gewindeaufnahmen (5) von der zweiten Montageseite (3) verdeckt sind.

6. Adapter nach einem der vorangehenden Ansprüche, bei dem die Drehscheibe (4) einen im Wesentlichen kreisrunden Außenumfang aufweist, an dem Rastnasen (10) ausgebildet sind, wobei an einem im Wesentlichen kreisrunden Innenumfang einer Ausnehmung im Innern des Gehäuses (1), in der die Drehscheibe (4) aufgenommen ist, ein zu den Rastnasen (10) korrespondierender Rastnasensitz (11) ausgebildet ist, und wobei die Sätze Gewindeaufnahmen (5), die Rastnasen (10) und der Rastnasensitz (11) derart zueinander angeordnet sind, dass die Drehscheibe (4) jeweils eine Rastposition einnimmt, wenn sich einer der Sätze Gewindeaufnahmen (5) in der Montageposition befindet.

7. Adapter nach einem der vorangehenden Ansprüche, bei dem die zweite Montageseite (3) als eine wahlweise abnehmbare Abdeckung eines Innenraums des Gehäuses (1), in dem die mindestens eine Drehscheibe (4) aufgenommen ist, ausgebildet ist, wobei die mindestens eine Drehscheibe (4) in dem Innenraum des Gehäuses (1) auswechselbar auf einer Drehwelle (12) montiert, insbesondere aufgeklipst, ist.

8. Adapter nach einem der vorangehenden Ansprüche, der weiterhin eine als separates Bauteil ausgebildete Adapterplatte (13) aufweist, welche die mindestens eine Drehscheibe (4) aufweist, wobei die Adapterplatte (13) mit der mindestens einen Drehscheibe (4) an dem Gehäuse festgelegt ist.

9. Adapter nach Anspruch 8, bei dem die Adapterplatte (13) über eine wieder auslösbare Verbindung, vorzugsweise über eine Schraub- oder eine Rastverbindung, in einer Adapterplattenaufnahme des Gehäuses (1) festgelegt ist.

10. Adapter nach Anspruch 8, bei dem die Adapterplatte (13) an einem Leistungsschalter vormontiert bereitgestellt ist, so dass der Leistungsschalter samt der Adapterplatte (13) durch Einsetzen der Adapterplatte (13) in eine Adapterplattenaufnahme des Gehäuses (1) festgelegt werden kann.

## Claims

1. An adapter for contacting a circuit breaker to a busbar system with a casing (1) having a first mounting side (2) to attach and electrically contact the adapter to at least one busbar of a busbar system and a second mounting side (3) to attach and electrically contact a circuit breaker to the casing (1), **characterized in that** on the second mounting side (3) at least one rotary disk (4) with several sets of threaded inserts (5) is fitted so that it can pivot around a rotational axis perpendicular to the mounting sides (2, 3) for attaching a circuit breaker, wherein each set of threaded inserts (5) is equipped for mounting a particular type of circuit breaker so that for each position of the rotary disk (4) one of the sets of threaded inserts (5) is positioned in a mounting position for a particular type of circuit breaker.

2. The adapter according to claim 1, wherein the second mounting side (3) has two rotary disks (4) which are positioned staggered on the second mounting side (3), wherein a first of the rotary disks (4) provides at least a first fastening point for the circuit breaker formed by a first set of threaded inserts (5) and a second of the rotary disks (4) provides at least a second fastening point formed by a second set of threaded inserts (5) and positioned staggered to the first mounting point.

3. The adapter according to claim 1, wherein the rotary disk (4) is incorporated in the casing (1), wherein the casing (1), in particular the second mounting side (3), has a grip aperture (6) to manually turn the rotary disk (4) on the periphery of the rotary disk (4).

4. The adapter according to claim 1, wherein the rotary disk (4) is incorporated in the casing (1), wherein the rotary disk (4) has inscriptions (7) indicating the different sets of threaded inserts (5), wherein the second mounting side (3) has a viewing window (8) through which exactly one of the inscriptions (7) can be seen according to the position of the rotary disk (4), and wherein the sets of threaded inserts (5), the inscriptions (7) and the viewing window (8) are positioned so that the inscription (7) indicating a particular set of threaded inserts (5) is visible through the viewing window (8) when this set of threaded inserts (5) is positioned in the mounting position.

5. The adapter according to claim 4, wherein the second mounting side (3) has at least one opening (9) through which the set of threaded inserts (5) in the mounting position is accessible, wherein all other sets of threaded inserts (5) are covered by the second mounting side (3).

6. The adapter according to claim 1, wherein the rotary disk (4) has a substantially circular exterior circumference having latches (10), wherein a latch site (11) is formed on the substantially circular inner circumference of a recess in the inside of the casing (1), in which the rotary disk is incorporated, and corresponds to the latches (10), and wherein the sets of threaded inserts (5), the latches (10) and the latch site (11) are positioned so that the rotary disk (4) is in a corresponding lock-in position when one of the sets of threaded inserts (5) is in the mounting position.

7. The adapter according to claim 1, wherein the second mounting side (3) is formed as an optionally removable cover for the inside of the casing (1) in which the at least one rotary disk (4) is incorporated, wherein the at least one rotary disk (4) is interchangeably fixed to a turning shaft (12) in the inside of the casing (1) and is particularly clipped.

8. The adapter according to claim 1, further having an adapter plate (13) formed as a separate component having at least one rotary disk (4), wherein the adapter plate (13) is attached to the casing (1) with the at least one rotary disk (4).

9. The adapter according to claim 8, wherein the adapter plate (13) is attached to the casing's (1) adapter plate insert via a releasable connection, preferably a screw or latch connection.

10. The adapter according to claim 8, wherein the adapter plate (13) is provided pre-mounted to a circuit breaker so that the circuit breaker and the adapter plate (13) can be attached to the casing's (1) adapter plate insert by inserting the adapter plate (13).

## Revendications

1. Adaptateur pour la mise en contact d'un commutateur de puissance avec un système de rail collecteur, avec un boîtier (1), qui comprend un premier côté de montage (2) pour la fixation et le contact électrique de l'adaptateur sur au moins un rail collecteur d'un système de rail collecteur et un deuxième côté de montage (3) pour la fixation et le contact électrique d'un commutateur de puissance sur le boîtier (1), **caractérisé en ce que**, sur le deuxième côté de montage (3) pour la fixation d'un commutateur de puissance, au moins une plaque tournante (4) avec plusieurs jeux de logements filetés (5) est fixé de manière rotative autour d'un axe de rotation perpendiculaire aux côtés de montage (2, 3), chaque jeu de logements filetés (5) étant conçu pour le montage d'un type de commutateur de puissance déterminé, de façon à ce que, selon la position de la plaque tournante (4), un des jeux de logements filetés (5) soit disposé dans une position de montage pour un type de commutateur de puissance déterminé.

2. Adaptateur selon la revendication 1, dans lequel le deuxième côté de montage (3) comprend deux plaques tournantes (4), qui sont disposées de manière décalée entre elles sur le deuxième côté de montage, une première plaque tournante (4) mettant à disposition un premier point de fixation constitué d'un premier jeu de logements filetés (5) pour le commutateur de puissance et une deuxième plaque tournante (4) mettant à disposition un deuxième point de fixation décalé par rapport au premier point de fixation et constitué d'un deuxième jeu de logements filetés.

3. Adaptateur selon l'une des revendications précédentes, dans lequel la plaque tournante (4) est logée dans le boîtier (1), le boîtier (1), plus particulièrement le deuxième côté de montage (3), comprenant, au niveau du bord de la plaque tournante (4), une ouverture d'emboîtement (6) pour l'entraînement en rotation manuel de la plaque tournante (4).

4. Adaptateur selon l'une des revendications précédentes, dans lequel la plaque tournante (4) est logée dans le boîtier (1), la plaque tournante (4) comprenant des inscriptions (7) identifiant les différents jeux de logements filetés (5), le deuxième côté de montage (3) comprenant une fenêtre (8) à travers laquelle, selon la position de la plaque tournante (4), exactement une des inscriptions (7) est visible, et les jeux de logements filetés (5), les inscriptions (7) et la fenêtre (8) étant disposés de façon à ce qu'une inscription (7) identifiant un jeu de logements filetés (5) déterminé soit visible dans la fenêtre (8) lorsque ce jeu de logements filetés (5) est disposé dans la position de montage.

5. Adaptateur selon la revendication 4, dans lequel le deuxième côté de montage (3) comprend au moins une ouverture (9) à travers laquelle le jeu de logements filetés (5) qui se trouve dans la position de montage est accessible, tous les autres jeux de logements filetés (5) étant recouverts par le deuxième côté de montage (3).

6. Adaptateur selon l'une des revendications précédentes, dans lequel la plaque tournante (4) présente une circonférence externe globalement circulaire, au niveau de laquelle sont réalisés des embouts d'encliquetage (10), moyennant quoi, au niveau d'une circonférence interne, globalement circulaire, d'une cavité à l'intérieur du boîtier (1), dans laquelle la plaque tournante (4) est logée, un siège d'embout d'encliquetage (11) correspondant aux embouts d'encliquetage (10) est réalisé et les jeux de logements filetés (5), les embouts d'encliquetage (10) et le siège d'embout d'encliquetage (11) étant disposés les uns par rapport aux autres de façon à ce que la plaque tournante (4) prenne une position d'encliquetage lorsqu'un des jeux de logements filetés (5) se trouve dans la position de montage.

7. Adaptateur selon l'une des revendications précédentes, dans lequel le deuxième côté de montage (3) est conçu comme un recouvrement amovible sélectif d'un espace interne du boîtier (1), dans lequel une plaque tournante (4) est logée, l'au moins une plaque tournante (4) étant montée, plus particulièrement clipsée, dans l'espace interne du boîtier (1), de manière interchangeable sur un arbre rotatif (12).

8. Adaptateur selon l'une des revendications précédentes, qui comprend en outre une plaque d'adaptateur (13) conçue comme un composant séparé, qui comprend l'au moins une plaque tournante (4), la plaque d'adaptateur (13) étant fixée au boîtier avec l'au moins une plaque tournante (4).

9. Adaptateur selon la revendication 8, dans lequel la plaque d'adaptateur (13) est fixée, par l'intermédiaire d'une liaison amovible, de préférence une liaison par vissage ou par encliquetage, dans un logement de plaque d'adaptateur du boîtier (1).

10. Adaptateur selon la revendication 8, dans lequel la plaque d'adaptateur (13) est mise à disposition de manière pré-montée sur un commutateur de puissance, de façon à ce que le commutateur de puissance avec la plaque d'adaptateur (13) puisse être fixé par insertion de la plaque d'adaptateur (13) dans un logement de plaque d'adaptateur du boîtier (1).
